# EUROPÄISCHE PATENTSCHRIFT

(11) **EP 3 290 887 B1**
(45) Veröffentlichungstag und Bekanntmachung des Hinweises auf die Patenterteilung: **12.04.2023**
(21) Anmeldenummer: 17186387.1
(22) Anmeldetag: 16.08.2017
(51) Int. Cl.: G01L 5/22, G01L 1/20, B62J 1/00

(54) **VORRICHTUNG SOWIE VERFAHREN ZUR BESTIMMUNG EINER FAHRRADSATTELGRÖSSE**
DEVICE AND METHOD FOR DETERMINING A BICYCLE SADDLE SIZE
PROCÉDÉ ET DISPOSITIF DE DÉTERMINATION D'UNE TAILLE DE SELLE DE BICYCLETTE

(30) Priorität: 30.08.2016 DE 102016216316; 08.12.2016 DE 102016224436
(43) Veröffentlichungstag der Anmeldung: 07.03.2018
(73) Patentinhaber: Ergon International GmbH, 56070 Koblenz (DE)
(72) Erfinder: Arnold, Franc, 56068 Koblenz (DE); Wintergerst, Götz, 70374 Stuttgart (DE); Jagodzinski, Ron, 73529 Schwäbisch Gmünd (DE)
(74) Vertreter: dompatent von Kreisler Selting Werner - Partnerschaft von Patent- und Rechtsanwälten mbB

(56) Entgegenhaltungen:
- EP-A2- 0 964 233
- EP-B1- 1 414 693
- DE-A1- 3 011 266
- DE-C1- 4 237 072
- DE-U1-202010 008 146

## Beschreibung

Die Erfindung betrifft eine Vorrichtung sowie ein Verfahren zur insbesondere individuellen Bestimmung einer Fahrradsattelgröße.

Der Komfort beim Fahrradfahren hängt stark von dem ausgewählten Fahrradsattel ab. Neben einer Vielzahl unterschiedlicher Dämpfungscharakteristika bei Fahrradsatteln beispielsweise durch Vorsehen unterschiedlicher Schaumstofflagen, eingesetzten Gelpads und dergleichen stellt insbesondere die Sitzbreite eines Fahrradsattels einen wesentlichen Aspekt dar. Die Sitzbreite eines Fahrradsattels wird bei modernen Fahrradsätteln an den individuellen Sitzknochenabstand angepasst. Dies erfolgt dadurch, dass in einem Fachgeschäft der individuelle Sitzknochenabstand bestimmt wird. Anschließend wird ein Fahrradsattel ausgewählt, dessen Breite auf den Abstand der Sitzknochen abgestimmt ist. Hierdurch soll bewirkt werden, dass im Bereich der Sitzknochen, in dem die größte Druckbelastung auftritt, eine entsprechende Dämpfung vorgesehen ist. Hierdurch sollen Druckstellen im Bereich der Sitzknochen des Benutzers vermieden werden. Zur Bestimmung des Sitzknochenabstandes ist es bekannt, in einem Fachgeschäft eine Wellpappe auf einem Stuhl oder der gleichen anzuordnen, auf die sich der Benutzer bzw. Kunde setzt. Hierbei erfolgt ein Eindrücken der Wellpappe durch die Sitzknochen. Der Abstand der beiden Eindrücke durch die Sitzknochen kann mit einem Maßstab bestimmt werden, sodass auf Basis des bestimmten Abstands ein Sattel ausgewählt wird, dessen Sitzpolster denselben Abstand aufweisen.

Desweiteren ist die Bestimmung des Sitzknochenabstands mit Hilfe eines Gelkissens aus EP 1 698 545 bekannt. Dieser ein Gel aufweisende Sitzbezug kann auf einen Sattel gespannt werden. Der Benutzer bzw. Käufer eines neuen Sattels muss sich auf den Sattel setzen. Die beiden Sitzknochen verdrängen das Gel in dem Gel-Überzug. Da in dem Gel-Überzug unmittelbar eine Messskala angeordnet sein kann, kann der Abstand der Sitzknochen unmittelbar bestimmt werden. Die Bestimmung des Sitzknochenabstands mittels des Gel-Überzugs ist jedoch ungenau und schwierig.

Aus DE 20 2010 008 146 ist es bekannt, auf einem Fahrradsattel eine Druckmessfolie mit einer Vielzahl von Drucksensoren anzuordnen. Diese Druckmesseinrichtung ist mit einer Auswerteeinrichtung verbunden, mit welcher die gesammelten Druckwerte mit Ortsbezug erfasst werden. Mit Hilfe dieser Daten wird ein individueller Sattel hergestellt. EP 1 414 693 B1 offenbart eine Anpassvorrichtung für die individuelle Fertigung von Zweiradsätteln.

EP 0 964 233 A2 offenbart einen Airbag mit Sensor zur orts- und/oder zeitauflösenden Kraft- oder Druckmessung.

DE 42 37 072 C1 offenbart einen resistiven Foliendrucksensor zur Überprüfung vonLeitungsunterbrechung bzw. Kurzschluss.

DE 30 11 266 A1 offenbart einen Druckmessaufnehmer für flächenhafte Druckverteilungen mittels einem elastischen Material, dessen elektrische Leitfähigkeit durch Druckeinwirkung größer wird.

Aufgabe der Erfindung ist es, eine Vorrichtung sowie ein Verfahren zur Bestimmung einer Fahrradsattelgröße zu schaffen, mit der eine einfache und korrekte Bestimmung möglich ist.

Die Lösung erfolgt erfindungsgemäß durch eine Vorrichtung gemäß Anspruch 1 bzw. ein Verfahren gemäß Anspruch 15.

Bei der erfindungsgemäßen Vorrichtung sowie dem erfindungsgemäßen Verfahren zur Bestimmung einer Fahrradsattelgröße kann je nach Ausführungsform der Erfindung gegebenenfalls nur eine Bestimmung des Abstands der Sitzknochen erfolgen. Hieraus kann sodann bestimmt werden, welche Sattelgröße bzw. welcher Satteltyp geeignet ist. Insofern erfolgt durch die erfindungsgemäße Vorrichtung sowie das erfindungsgemäße Verfahren ggf. nur mittelbar eine Bestimmung der Fahrradsattelgröße. Bei einer endgültigen Festlegung des für den Benutzer am besten geeigneten Fahrradsattels können ggf. noch weitere Randbedingungen wie beispielsweise die bevorzugte Sitzposition, die Art des Fahrrads für welches der Sattel verwendet wird, individuelle Vorlieben etc. berücksichtigt werden.

Die erfindungsgemäße Vorrichtung zur zumindest mittelbaren Bestimmung einer Fahrradsattelgröße weist eine Druckerfassungseinrichtung auf. Mit der Druckerfassungsvorrichtung erfolgt eine ortsbezogene Druckerfassung mittels mehrerer Sensorelemente. Mit den einzelnen Sensorelementen ist eine Datenerfassungseinrichtung verbunden. Diese erfasst die von den Sensorelementen erzeugten Daten, wobei es sich beispielsweise insbesondere um eine aufgrund des Drucks erfasste elektrische Widerstandsänderung, eine erzeugte Spannung oder dergleichen handeln kann. Mit der Datenerfassungseinrichtung ist eine Datenausgabeeinrichtung verbunden. Hierbei kann es sich bei einer einfachen Ausführungsform um einen Bildschirm, einen Drucker oder dergleichen handeln, durch den die erfassten Daten wiedergegeben werden. Die Wiedergabe kann hierbei in einfacher Ausführungsform derart erfolgen, dass beispielsweise eine Tabelle ausgegeben wird, die anzeigt, welcher Wert (Widerstand, Spannung etc.) bei welchem Sensorelement ermittelt wurde. Aus diesen Daten kann sodann vom Bedienpersonal der Einrichtung ermittelt werden, an welchen Sensorelementen maximale Werte aufgetreten sind. Der Abstand zwischen diesen Sensorelementen entspricht sodann dem Sitzknochenabstand. Beispielsweise kann der Abstand einzelner Sensorelemente aus einer Tabelle ausgelesen bzw. in der Tabelle hinterlegt sein.

Erfindungsgemäß weist die Druckerfassungseinrichtung ein druckabhängiges Widerstandselement auf, das mit den Sensorelementen zusammenwirkt. Geeignet als druckabhängiges Widerstandselement ist insbesondere ein folienartig ausgebildetes Element, dessen Widerstand sich in Abhängigkeit des Drucks ändert. Diese Veränderung des elektrischen Widerstands kann auf einfache Weise durch die Sensorelemente gemessen werden. Als geeignetes druckabhängiges Widerstandselement kann beispielsweise das Produkt Velostat der Firma 3M verwendet werden. Ferner ist das Produkt mit der Bezeichnung Linqstat der Firma Caplinq sehr gut geeignet.

Erfindungsgemäß weist die Druckerfassungseinrichtung mehrere Leiterbahnen als Sensorelemente auf. Diese sind insbesondere derart ausgebildet, dass die einzelnen Leiterbahnen zu einer Messung der Widerstandsänderung bei Druck vorgesehen sind.

Des weiteren ist es bevorzugt, dass die Sensorelemente in einer ggf. gekrümmten Sensorebene angeordnet sind bzw. eine Sensorebene ausbilden.

Bei einer bevorzugten Weiterbildung der Erfindung ist die Druckerfassungseinrichtung derart ausgebildet, dass sie zusätzlich ein Elektrodenelement aufweist. Hierbei handelt sich in besonders bevorzugter Ausführungsform um ein elektrisch leitfähiges Element, das insbesondere flächig und besonders bevorzugt folienartig ausgebildet ist.

Erfindungsgemäß ist es, dass das druckabhängige Widerstandselement zwischen den Sensorelementen und dem Elektrodenelement angeordnet ist. Insbesondere wenn das Elektrodenelement mit einer Energiequelle verbunden ist, kann bei vorzugsweise als Leiterbahnen ausgebildeten Sensorelementen auf einfache Weise eine durch Druckänderung hervorgerufene Widerstandsänderung des druckabhängigen Widerstandselements gemessen werden.

Hierbei ist es besonders bevorzugt, dass die Sensorelemente in einer Ebene angeordnet sind, als auch dass sowohl das druckabhängige Widerstandselement als auch das Elektrodenelement folienartig ausgebildet sind. Es ist insofern auf einfache Weise möglich, diese Bauteile flächig aufeinander zu legen. Besonders bevorzugt ist es, dass die Sensorelemente in eine Platine integriert sind. Auf diese Platine kann sodann unmittelbar das folienartig ausgebildete druckabhängige Widerstandselement und über dieses das Elektrodenelement gelegt werden. Zur Fixierung der Bauteile können diese beispielsweise miteinander verklebt werden. Bevorzugt ist es, dass, um eine Verfälschung der Messergebnisse zu vermeiden, das druckabhängige Widerstandselement auf die insbesondere als Platine ausgebildeten Sensorelemente aufgelegt wird und auch das flächige Elektrodenelement nur aufgelegt wird. Eine Fixierung erfolgt dann beispielsweise mit Hilfe eines Klebebands oder eines Klebestreifens, vorzugsweise nur am Rand. Bevorzugt ist es ferner, dass die vorzugsweise als Platine ausgebildeten Sensorelemente derart ausgebildet sind, dass die Platine eine Öffnung aufweist, die insbesondere als Langloch ausgebildet ist. Durch die Langlöcher können Seitenbereiche des Elektrodenelements hindurchgeführt und auf der Unterseite der Platine fixiert werden. Hierdurch ist ein einfaches und sicheres Halten des druckabhängigen Widerstandselements gewährleistet.

Vorzugsweise ist die Datenerfassungseinrichtung mit einer Datenverarbeitungseinrichtung verbunden. Durch die Datenverarbeitungs-einrichtung erfolgt eine automatische Verarbeitung der von den Sensorelementen erfassten Daten. Die be- bzw. verarbeiteten Daten werden sodann an die Datenausgabeeinrichtung weitergeleitet. Besonders bevorzugt ist es daher, dass die Datenverarbeitungseinrichtung die beiden Maximalwerte bestimmt, die von den Sensorelementen erzeugt wurden. Aus diesen Maximalwerten kann sodann insbesondere vorzugsweise ebenfalls automatisch von der Datenverarbeitungseinrichtung ein Abstand der beiden Maximalwerte bzw. ein Abstand der beiden entsprechenden Sensorelemente ermittelt werden. Dies kann wiederum auf Basis einer hinterlegten Tabelle oder dergleichen erfolgen. Der ermittelte Abstand entspricht sodann dem Sitzknochenabstand des Benutzers.

Es ist daher bevorzugt, dass die Datenausgabeeinrichtung den von der Datenverarbeitung bestimmten Sitzknochenabstand ausgibt. Gegebenenfalls kann die Datenverarbeitung derart weitergebildet sein, dass zusätzlich oder anstatt der Ermittlung bzw. Ausgabe des Sitzknochenabstands ein geeigneter Sattel bzw. mehrere geeignete Sättel empfohlen werden, die für den ermittelten Sitzknochenabstand geeignet sind. Hierbei können beispielsweise weitere individuelle Anforderungen berücksichtigt werden. Zur Ermittlung des Sitzknochenabstands bzw. zur Bestimmung einer Fahrradsattelgröße ist es somit erfindungsgemäß erforderlich, dass sich ein Benutzer auf die Druckerfassungseinrichtung setzt, so dass von den Sitzknochen Druck erzeugt wird, der sodann von den entsprechenden Sensorelementen erfasst werden kann. Daher ist es besonders bevorzugt, dass die Druckerfassungseinrichtung flächig, insbesondere folienartig ausgebildet ist. Ferner kann die insbesondere flächig oder folienartig ausgebildete Druckerfassungseinrichtung auf einem sattelförmigen Sitzelement angeordnet sein. Hierdurch ist es insbesondere möglich, die einzelnen Sensorelemente derart auszurichten, dass eine Bestimmung des Sitzknochenabstands zuverlässig möglich ist.

Um die Messung weiter zu verbessern, ist es ferner möglich, das Elektrodenelement derart auszubilden, dass dieses zweite Sensorelemente aufweist. Diese zweiten Sensorelemente sind wiederum vorzugsweise als Leiterbahnen ausgebildet. Die zweiten Sensorelemente weisen vorzugsweise eine Orientierung auf, die sich von der Orientierung der ersten Sensorelemente unterscheidet. Werden als erste und zweite Sensorelemente jeweils parallel zueinander verlaufende Leiterbahnen verwendet, ist es bevorzugt, die Leiterbahnen in einem Winkel ≠ 0° zueinander anzuordnen. Besonders bevorzugt ist ein Winkel, der zumindest im Bereich von 45° liegt. Insbesondere ist ein Winkel von 90° der jeweiligen Leiterbahnen zueinander bevorzugt, so dass eine Gitterstruktur entsteht.

Bei Verwendung einer Datenerfassungseinrichtung mit einer Vielzahl von Sensorelementen und daher einer Vielzahl von Datenausgängen ist es bevorzugt, zwischen den Sensorelementen und der Datenerfassungseinrichtung zur Erhöhung der Anzahl der Anschlüsse Multiplexer-Einrichtungen anzuordnen.

Gemäß dem erfindungsgemäßen Verfahren zur insbesondere mittelbaren Bestimmung einer Fahrradsattelgröße, insbesondere zur Bestimmung eines Sitzknochenabstands ist in bevorzugter Ausführungsform die vorstehend beschriebene Vorrichtung besonders gut geeignet. Gemäß dem erfindungsgemäßen Verfahren erfolgt zunächst ein Erfassen von Drucksignalen, die von in einer Druckerfassungseinrichtung angeordneten Sensorelementen erzeugt werden. Bei der Druckerfassungseinrichtung handelt es sich vorzugsweise um die vorstehend im Zusammenhang mit der erfindungsgemäßen Vorrichtung beschriebene Druckerfassungseinrichtung, insbesondere in bevorzugten Weiterbildungen. Im nächsten Schritt erfolgt ein Bestimmen eines Sitzknochenabstands auf Basis der erfassten Daten. Diese Bestimmung erfolgt insbesondere mittels einer Datenverarbeitungseinrichtung.

Die Erzeugung des Drucksignals erfolgt vorzugsweise dadurch, dass sich ein Benutzer auf die Druckerfassungseinrichtung setzt.

Im erfindungsgemäßen Verfahren werden aus den erfassten Drucksignalen die beiden Maximalwerte ermittelt bzw. ausgefiltert. Hierdurch ist es wie insbesondere vorstehend anhand der erfindungsgemäßen Vorrichtung beschrieben, auf einfache Weise möglich, den Abstand zwischen den beiden Sensorelementen zu bestimmen, durch die die entsprechenden Maximalwerte erzeugt wurden. Der entsprechend ermittelte Abstand kann sodann mit Hilfe einer Ausgabeeinrichtung wie einer Anzeigeeinrichtung ausgeben werden. Hierbei erfolgt insbesondere die unmittelbare Ausgabe des Sitzknochenabstands. Der Benutzer kann hieraus sodann insbesondere in Verbindung mit anderen individuellen Bedürfnissen sich einen geeigneten Sattel auswählen. Gegebenenfalls kann hier bereits insbesondere in Verbindung mit weiteren individuellen Bedürfnissen die Empfehlung eines geeigneten Fahrradsattels erfolgen.

Nachfolgend wird die Erfindung anhand einer bevorzugten Ausführungsform mit Bezugnahme auf die anliegenden Zeichnungen näher erläutert.

Es zeigen:
- Fig. 1:: eine schematische Darstellung einer Vorrichtung zur Bestimmung eines Sitzknochenabstands,
- Fig. 2:: eine schematische perspektivische Expositionszeichnung eines oberen Teils des Sitzelements,
- Fig. 3:: eine perspektivische Unteransicht der in Fig. 2 dargestellten Bauteile in montiertem Zustand,
- Fig. 4:: eine perspektivische Ansicht der einzelnen wesentlichen Bauteile der Druckerfassungseinrichtung, und
- Fig. 5:: eine schematische Darstellung der Druckerfassungseinrichtung.

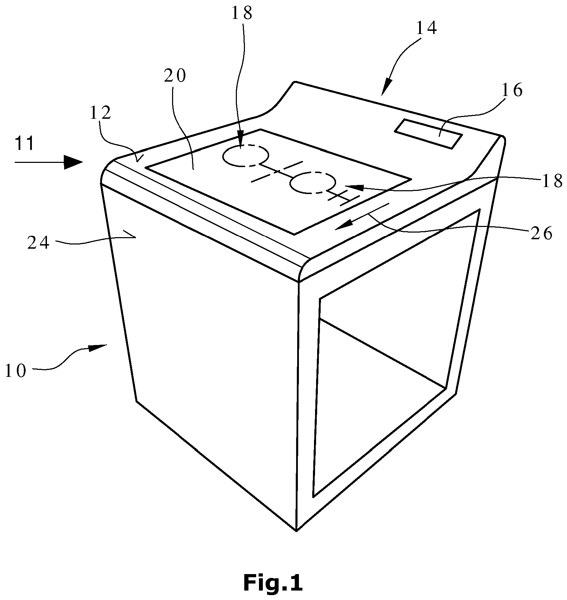

Fig. 1 zeigt ein entsprechend eines Hockers ausgebildetes Sitzelement 10. Dieses weist ein oberes Sitzelement 11 auf, das eine Sitzfläche 12 ausbildet. Ein Benutzer muss sich auf die Sitzfläche 12 setzen, um mit Hilfe der erfindungsgemäßen Vorrichtung den individuellen Sitzknochenabstand zu bestimmen. Die Sitzfläche 12 ist im dargestellten Ausführungsbeispiel eben ausgebildet, kann jedoch auch entsprechend der Oberfläche eines Sattels ausgebildet sein, wobei dies nicht unbedingt erforderlich ist.

An einer Rückseite der Sitzfläche 12 ist ein leicht nach oben abgewinkelter Ansatz 14 vorgesehen. In dem Ansatz 14 ist ein Display 16 angeordnet, auf dem der individuelle Sitzknochenabstand angezeigt wird. Durch Vorsehen des Ansatzes 14, insbesondere über die gesamte Breite des Sitzhockers 10, ist ebenfalls definiert, dass sich ein Benutzer derart auf den Hocker 10 setzt, dass der Ansatz 14 entgegen seiner Blickrichtung angeordnet ist.

Ferner können auf der Oberseite zur Orientierung durch Kreise 18 Bereiche angedeutet werden, in denen die Sitzknochen etwa angeordnet sein sollten, wenn sich der Benutzer auf die Sitzfläche 12 setzt. Insbesondere ist der gesamte Bereich 20 zur Druckerfassung geeignet.

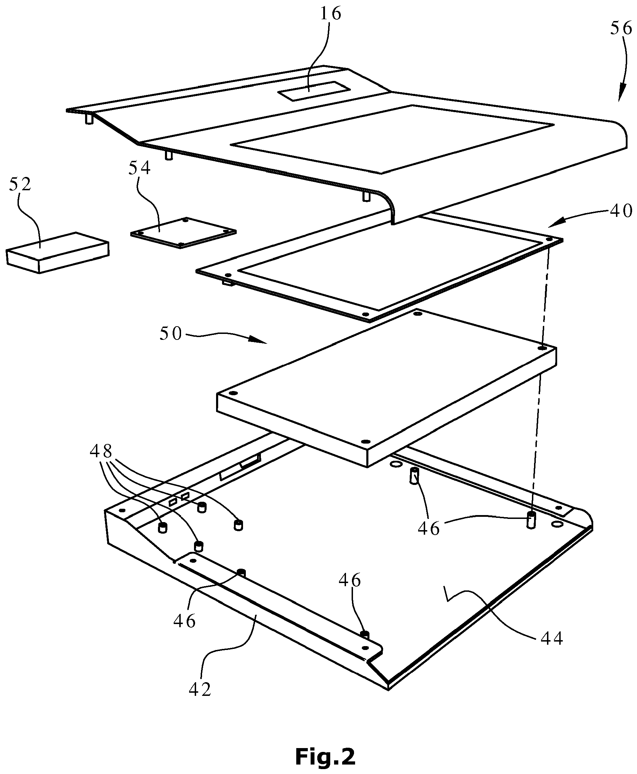

Beispielsweise unter einer Schutzfolie aus Nylongewebe oder dergleichen ist unter dem Bereich 20 die Druckerfassungseinrichtung 40 (Fig. 2) angeordnet.

Aus Fig. 2 ist zunächst der Aufbau des oberen Sitzelements 11 ersichtlich. Das obere Sitzelement 11 weist ein erstes Gehäuseelement 42 auf, bei dem es sich beispielsweise um ein aus Metallblech gebogenes Gehäuseelement handeln kann. Auf einer Innenseite 44 des unteren Gehäuseelements 42 sind mehrere Gewindehülsen 46, 48 angeordnet, wobei es sich auch um stiftförmige Elemente handeln kann.

Die im dargestellten Ausführungsbeispiels als zylindrische Gewindehülsen ausgebildeten Justageelemente 46 dienen zunächst zur Justage eines Unterstützungselements 50. Dieses ist im dargestellten Ausführungsbeispiel plattenförmig ausgebildet. Insbesondere handelt es sich um eine aus Holz oder Kunststoff hergestellte Platte. Diese ist insbesondere elektrisch nicht leitfähig und weist eine geeignete Stabilität auf, um das Gewicht einer sich auf den Hocker setzenden Person abstützen zu können. Oberhalb des Unterstützungselements 50 ist die Druckerfassungseinrichtung 40 angeordnet. Des weiteren sind innerhalb des unteren Gehäuseelements 42 ein Batteriefach 52 sowie die Datenerfassungs- und Datenverarbeitungseinrichtung 54 angeordnet. Die Pins oder Gewindeansätze 48 dienen hierbei zur Justage des Batteriefachs 52.

Das untere Gehäuse 42 ist sodann von einem oberen Gehäuse 56 verschlossen. Innerhalb des oberen Gehäuses 56 ist das Display 16 angeordnet, das elektrisch mit der Datenerfassungs- und Datenverarbeitungseinrichtung 54 verbunden ist. Das obere Gehäuse 56 ist rahmenförmig ausgebildet und weist eine Ausnehmung auf, unterhalb der die Druckerfassungseinrichtung 40 angeordnet ist. Die Ausnehmung ist mit einer Schutzfolie beispielsweise aus Nylongewebe verschlossen. Die Schutzfolie dient zur Verhinderung des Eindringens von Feuchtigkeit und Schmutzpartikeln.

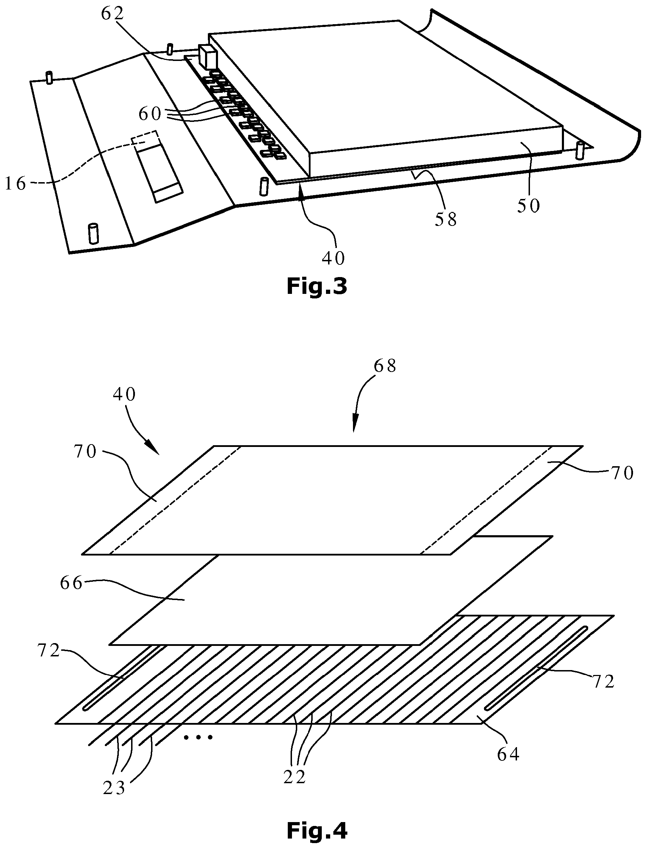

In montiertem Zustand (Fig. 3) ist die Druckerfassungseinrichtung 40 zunächst an einer Innenseite 58 des oberen Gehäuses 56 angeordnet. Wie in Fig. 3 gut sichtbar ist, ragt die Druckerfassungseinrichtung 40 seitlich über das Unterstützungselement 50 vor. Hierdurch können auf einer Platine der Druckerfassungseinrichtung 40 auf einfache Weise Elektrobauteile 60, 62 angeordnet werden.

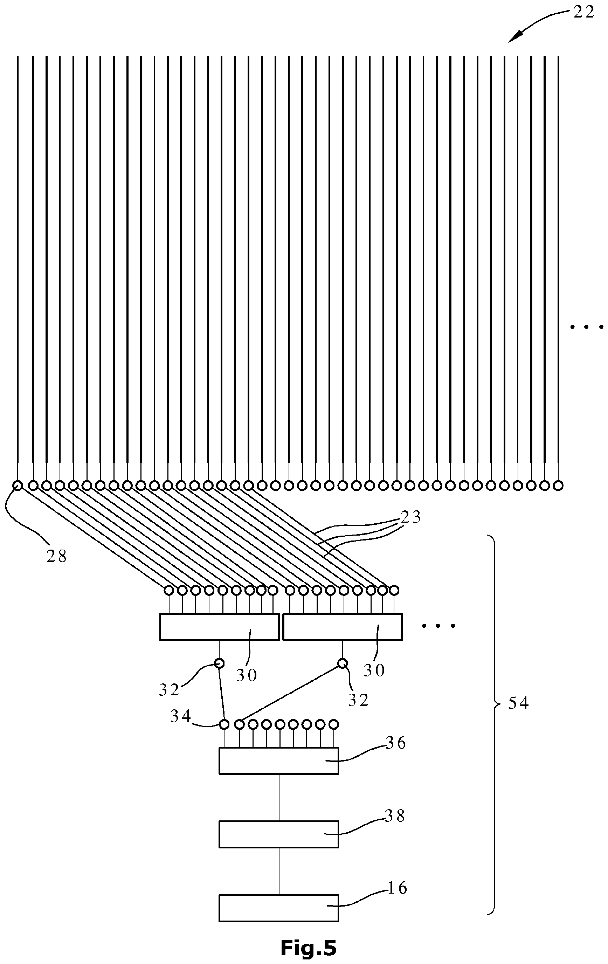

Die Druckerfassungseinrichtung 40 weist im dargestellten Ausführungsbeispiel, wie insbesondere in Fig. 4 dargestellt, eine Platine 64 auf. Diese trägt auf ihrer Unterseite die Elektronikbauteile 60, 62. Des weiteren weist die Platine 64 als Leiterbahnen ausgebildete Sensorelemente 22 auf. Diese sind über Leitungen 23 mit der Datenerfassungs- und Datenverarbeitungseinrichtung 54 (Fig. 5) verbunden.

Die als Leiterbahnen ausgebildeten Sensorelemente 22 sind von einem als Folie ausgebildeten druckabhängigen Widerstandselement 66 abgedeckt, bei dem es sich insbesondere um eine Folie mit der Bezeichnung Linqstat der Firma Caplinq handelt.

Das druckabhängige Widerstandselement 66 ist im dargestellten Ausführungsbeispiel mit einem elektrisch leitfähigen Elektrodenelement 68, bei dem es sich insbesondere um eine dünne Metallfolie handelt, abgedeckt. Seitenteile 70 des Elektrodenelements 68 werden zur Fixierung im dargestellten Ausführungsbeispiel durch Schlitze 72 der Platine 64 geführt und auf der Rückseite bzw. der in Fig. 4 nach unten weisenden Seite der Platine 64 fixiert. Somit ist sowohl das Elektrodenelement 68 als auch das zwischen Elektrodenelement 68 und den Sensorelementen 22 angeordnete druckabhängige Widerstandselement 66 auf einfache Weise fixiert.

Die Platine 64 weist eine Vielzahl parallel zueinander verlaufender Leiterbahnen 22 (Fig. 5) auf. Die Leiterbahnen verlaufen insbesondere in Fig. 1 von der Rückseite 14 in Richtung einer Vorderseite 24, wie durch einen Pfeil 26 angedeutet. Sämtliche Leiterbahnen weisen in dem dargestellten Ausführungsbeispiel jeweils einen Anschluss 28 auf. Jeweils 9 Anschlüsse der Sensorelemente 22 sind mit einem Multiplexer 30 verbunden. Jede einzelne Multiplexer-Einrichtung 30 weist einen Ausgang 32 auf. Die Ausgänge der Multiplexer-Einrichtung 30 sind jeweils mit Eingängen 34 einer Datenerfassungs-/Datenverarbeitungseinrichtung 36 verbunden. Die Datenerfassungseinrichtung 36 ist mit einer Datenverarbeitungseinrichtung 38 verbunden. Insbesondere sind die Datenerfassungseinrichtung 36 und die Datenausgabeeinrichtung 38 in einem Bauteil bzw. einer Einrichtung zusammengefasst.

Mit Hilfe der Datenerfassungs- und Datenverarbeitungseinrichtung 36 erfolgt einerseits ein Erfassen der von den Sensorelementen 22 ausgegebenen Daten, bei denen es sich insbesondere um Widerstandsänderungen handelt. Ferner erfolgt ein Verarbeiten der erfassten Daten. Hierbei kann mit Hilfe der Datenverarbeitungseinrichtung 36 erfasst werden, welche Sensorelemente bzw. Leiterbahnen 22 einen Maximal-/Minimalwert ausgeben. Im nächsten Schritt kann sodann der Abstand zwischen diesen Sensorelementen, die die beiden Maximalwerte ausgeben, ermittelt werden. Der Abstand der beiden Sensorelemente, der beispielsweise in einer Tabelle hinterlegt werden kann, wird in bevorzugter Ausführungsform sodann auf dem Display 16 angezeigt.

Bei einem konstanten Abstand der einzelnen Leiterbahnen könnte der Abstand der beiden Leiterbahnen, die den Maximalwert ausgeben, auch berechnet werden.

Vorzugsweise erfolgt auf dem Display 16 eine Anzeige des Sitzknochenabstands insbesondere in cm oder mm.

Zur Verbesserung der Messergebnisse könnte das Elektrodenelement 68 ebenfalls mehrere, insbesondere als Leiterbahnen ausgebildete zweite Sensorelemente aufweisen, die jedoch nicht in den Figuren dargestellt sind. Diese sind in bevorzugter Ausführungsform wiederum parallel zueinander angeordnet. Die Leiterbahnen werden vorzugsweise in einem Winkel von insbesondere 90° zu den Leiterbahnen 22 angeordnet. Hierdurch sind bei der Ermittlung der Maximalwerte zwei exakte Punkte definierbar, so dass die Abstandsbestimmung genauer ist.

Durch eine derartige Ausgestaltung der Vorrichtung können auch Druckverteilungen bestimmt werden. Diese können zur weiteren Bestimmung des für den Benutzer geeigneten Sattels herangezogen werden.

## Patentansprüche

1. Vorrichtung zur Bestimmung eines Sitzknochenabstands, insbesondere zur Bestimmung einer Fahrradsattelgröße, mit
einer Druckerfassungseinrichtung zur ortsbezogenen Druckerfassung mit mehreren Sensorelementen (22), die als Leiterbahnen ausgebildet sind, einer mit den Sensorelementen (22) verbundenen Datenerfassungseinrichtung (36) und
einer mit der Datenerfassungseinrichtung (36) verbundenen Datenausgabeeinrichtung (16),
wobei die Druckerfassungseinrichtung ein mit den Sensorelementen (22) zusammenwirkendes druckabhängiges Widerstandselement (66) und ein Elektrodenelement (68) aufweist, wobei das druckabhängige Widerstandselement (66) zwischen den Sensorelementen (22) und dem Elektrodenelement (68) angeordnet ist.

2. Vorrichtung nach Anspruch 1, **dadurch gekennzeichnet, dass** das druckabhängige Widerstandselement (66) flächig, insbesondere folienartig ausgebildet ist.

3. Vorrichtung nach Anspruch 1 oder 2, **dadurch gekennzeichnet, dass** die Sensorelemente (22) durch mehrere, parallel zueinander verlaufende Leiterbahnen ausgebildet sind.

4. Vorrichtung nach Anspruch 3, **dadurch gekennzeichnet, dass** die Sensorelemente (22) eine Sensorebene ausbilden bzw. in einer Ebene angeordnet sind.

5. Vorrichtung nach Anspruch 1, **dadurch gekennzeichnet, dass** das Elektrodenelement (68) flächig, insbesondere folienartig ausgebildet ist.

6. Vorrichtung nach einem der Ansprüche 1 bis 5, **dadurch gekennzeichnet, dass** das Elektrodenelement (68) mit einer Energiequelle verbunden ist.

7. Vorrichtung nach einem der Ansprüche 1 bis 6, **gekennzeichnet durch** eine mit der Datenerfassungseinrichtung (36) verbundenen Datenverarbeitungseinrichtung (38) zur Bestimmung der beiden von der Datenerfassungseinrichtung (36) erfassten Maximalwerte der Sensorelemente (22).

8. Vorrichtung nach Anspruch 7, **dadurch gekennzeichnet, dass** die Datenverarbeitungseinrichtung (38) auf Basis der beiden bestimmten Maximalwerte einen Abstand, der die Maximalwerte erfassenden Sensorelemente (22) bestimmt.

9. Vorrichtung nach Anspruch 8, **dadurch gekennzeichnet, dass** die Datenausgabeeinrichtung (16) den bestimmten Abstand ausgibt.

10. Vorrichtung nach einem der Ansprüche 1 bis 9, **dadurch gekennzeichnet, dass** zwischen den Sensorelementen (22) und der Datenerfassungseinrichtung (36) zur Erhöhung der Anzahl der Anschlüsse Multiplexer-Einrichtungen (30) angeordnet sind.

11. Vorrichtung nach einem der Ansprüche 1 bis 10, **dadurch gekennzeichnet, dass** die Druckerfassungseinrichtung flächig, insbesondere folienartig ausgebildet ist.

12. Vorrichtung nach einem der Ansprüche 1 bis 11, **dadurch gekennzeichnet, dass** die Druckerfassungseinrichtung auf einem insbesondere sattelförmig ausgebildeten Sitzelement (10) angeordnet ist.

13. Vorrichtung nach einem der Ansprüche 4 bis 12, **dadurch gekennzeichnet, dass** das Elektrodenelement (68) zweite Sensorelemente aufweist, die eine zur Orientierung der ersten Sensorelemente unterschiedliche Orientierung aufweisen.

14. Vorrichtung nach Anspruch 13, **dadurch gekennzeichnet, dass** die Sensorelemente jeweils parallel zueinander verlaufende Leiterbahnen aufweisen, die in einem Winkel von ≠ 0°, insbesondere in einem Winkel von ca. 90° zueinander verlaufen.

15. Verfahren zur Bestimmung eines Sitzknochenabstands, insbesondere zur Bestimmung einer Fahrradsattelgröße, mittels einer Vorrichtung nach einem der Ansprüche 1 bis 14, mit den Schritten:
Erfassen von Drucksignalen, die von in einer Druckerfassungseinrichtung angeordneten Sensorelementen (22) erzeugt werden, und
Bestimmen eines Sitzknochenabstands auf Basis der beiden Maximalwerte der erfassten Daten, insbesondere mittels einer Datenverarbeitungseinrichtung (38).

16. Verfahren nach Anspruch 15, wobei die Drucksignale erzeugt werden, indem sich ein Benutzer auf die Druckerfassungseinrichtung setzt.

17. Verfahren nach Anspruch 15, wobei die Datenverarbeitungseinrichtung (38) den Abstand der beiden die Maximalwerte erfassenden Sensorelemente (22) bestimmt und vorzugsweise mittels einer Datenausgabeeinrichtung (16) ausgibt.

## Claims

1. Device for determining a seat bone distance, in particular for determining a bicycle saddle size, comprising
a pressure sensing device for a location-dependent pressure acquisition comprising a plurality of sensor elements (22) which are configured as conductor paths,
a data acquisition device (36) connected to the sensor elements (22) and
a data output device (16) connected to the data acquisition device (36),
wherein the pressure sensing device comprises a pressure-dependent resistor element (66), which cooperates with the sensor elements (22), and an electrode element (68), the pressure-dependent resistor element (66) being arranged between the sensor elements (22) and the electrode element (68).

2. Device according to claim 1, **characterized in that** the pressure-dependent resistor element (66) is two-dimensional, in particular film-like.

3. Device according to claim 1 or 2, the sensor elements (22) are formed by a plurality of conductor paths extending parallel to one another.

4. Device according to claim 3, **characterized in that** the sensor elements (22) form a sensor plane or are arranged in a plane.

5. Device according to claim 1, **characterized in that** the electrode element (68) is two-dimensional, in particular film-like.

6. Device according to any one of claims 1 - 5, **characterized in that** the electrode element (68) is connected to an energy source.

7. Device according to any one of claims 1 - 6, **characterized by** a data processing device (38) connected to the data acquisition device (36), for determining the two maximum values of the sensor elements (22) detected by the data acquisition device (36).

8. Device according to claim 7, **characterized in that**, based on the two maximum values determined, the data processing device (38) determines a distance between the sensor elements (22) detecting the maximum values.

9. Device according to claim 8, **characterized in that** the data output device (16) outputs the determined distance.

10. Device according to any one of claims 1 to 9, **characterized in that** multiplexer devices (30) are arranged between the sensor elements (22) and the data acquisition device (36) to increase the number of connectors.

11. Device according to any one of claims 1 to 10, **characterized in that** the pressure sensing device is two-dimensional, in particular film-like.

12. Device according to any one of claims 1 to 11, **characterized in that** the pressure sensing device is arranged on a seat element (10) formed in particular in the shape of a saddle.

13. Device according to any one of claims 4 to 12, **characterized in that** the electrode element (68) comprises second sensor elements, the orientation of which is different from the orientation of the first sensor elements.

14. Device according to claim 13, **characterized in that** the sensor elements each have conductor paths extending parallel to one another, which extend at an angle of ≠ 0°, in particular at an angle of approx. 90°, with respect to one another.

15. Method for determining a seat bone distance, in particular for determining a bicycle saddle size, using a device according to any one of claims 1 to 14, comprising the steps of:
detecting pressure signals generated by sensor elements (22) arranged in a pressure sensing device, and
determining a seat bone distance based on the two maximum values of the acquired data, in particular by means of a data processing device (38).

16. Method according to claim 15, wherein the pressure signals are generated by a user sitting down on the pressure sensing device.

17. Method according to claim 15, wherein the data processing device (38) determines the distance between the two sensor elements (22) detecting the maximum values and outputs the same preferably via a data output device (16).

## Revendications

1. Dispositif destiné à la détermination d'un écart des os coxaux, en particulier afin de déterminer une taille de selle de bicyclette, doté
d'un dispositif de détection de pression destiné à détecter la pression exercée localement, doté de plusieurs éléments de capteur (22), lesquels sont réalisés comme bandes conductrices,
d'un dispositif de saisie de données (36) relié aux éléments de capteur (22) et
d'un dispositif de sortie de données (16) relié au dispositif de saisie de données (36),
dans lequel le dispositif de détection de pression comporte un élément de résistance (66) dépendant de la pression coopérant avec les éléments de capteur (22) et un élément d'électrode (68), dans lequel l'élément de résistance (66) dépendant de la pression est disposé entre les éléments de capteur (22) et l'élément d'électrode (68).

2. Dispositif selon la revendication 1, **caractérisé en ce que** l'élément de résistance (66) dépendant de la pression est réalisé comme plat, en particulier en forme de feuille.

3. Dispositif selon la revendication 1 ou 2, **caractérisé en ce que** les éléments de capteur (22) sont réalisés par plusieurs bandes conductrices parallèles les unes aux autres.

4. Dispositif selon la revendication 3, **caractérisé en ce que** les éléments de capteur (22) réalisent un plan de capteurs ou sont disposés dans un plan.

5. Dispositif selon la revendication 1, **caractérisé en ce que** l'élément d'électrode (68) est réalisé comme plat, en particulier en forme de feuille.

6. Dispositif selon l'une des revendications 1 à 5, **caractérisé en ce que** l'élément d'électrode (68) est relié à une source d'énergie.

7. Dispositif selon l'une des revendications 1 à 6, **caractérisé par** un dispositif de traitement de données (38) relié au dispositif de saisie de données (36) destiné à déterminer les deux valeurs maximales des éléments de capteur (22) saisies par le dispositif de saisie de données (36).

8. Dispositif selon la revendication 7, **caractérisé en ce que** le dispositif de traitement de données (38) détermine sur la base des deux valeurs maximales déterminées, un écart entre les éléments de capteur (22) saisissant les valeurs maximales.

9. Dispositif selon la revendication 8, **caractérisé en ce que** le dispositif de sortie de données (16) délivre l'écart déterminé.

10. Dispositif selon l'une des revendications 1 à 9, **caractérisé en ce que** des dispositifs multiplexeurs (30) sont disposés entre les éléments de capteur (22) et le dispositif de saisie de données (36) afin d'augmenter le nombre de connexions.

11. Dispositif selon l'une des revendications 1 à 10, **caractérisé en ce que** le dispositif de détection de pression est réalisé comme plat, en particulier en forme de feuille.

12. Dispositif selon l'une des revendications 1 à 11, **caractérisé en ce que** le dispositif de détection de pression est disposé sur un élément d'assise (10) en particulier réalisé en forme de selle.

13. Dispositif selon l'une des revendications 4 à 12, **caractérisé en ce que** l'élément d'électrode (68) comporte des deuxièmes éléments de capteur présentant une orientation différente de l'orientation des premiers éléments de capteur.

14. Dispositif selon la revendication 13, **caractérisé en ce que** les éléments de capteur comportent des bandes conductrices respectivement parallèles les unes aux autres, lesquelles s'étendent les unes par rapport aux autres selon un angle ≠0°, en particulier selon un angle d'environ 90°.

15. Procédé destiné à la détermination d'un écart des os coxaux, en particulier afin de déterminer une taille de selle de bicyclette, au moyen d'un dispositif selon l'une des revendications 1 à 14 avec les étapes :
saisie de signaux de pression, lesquels sont générés par des éléments de capteur (22) disposés dans un dispositif de détection de pression, et
détermination d'un écart des os coxaux sur la base des deux valeurs maximales des données saisies, en particulier au moyen d'un dispositif de traitement de données (38).

16. Procédé selon la revendication 15, dans lequel les signaux de pression sont générés en faisant s'asseoir un utilisateur sur le dispositif de détection de pression.

17. Procédé selon la revendication 15, dans lequel le dispositif de traitement de données (38) détermine l'écart entre les deux éléments de capteur (22) saisissant les valeurs maximales et, de préférence, le délivre au moyen d'un dispositif de sortie de données (16).
